# FASCICULE DE BREVET EUROPEEN

(11) **EP 2 524 816 B1**
(45) Date de publication et mention de la délivrance du brevet: **01.07.2015**
(21) Numéro de dépôt: 12168371.8
(22) Date de dépôt: 16.05.2012
(51) Int. Cl.: B60B 9/02, F16D 3/62

(54) **Dispositif d'accouplement en rotation d'une couronne à une roue ainsi qu'un atterrisseur d'aéronef muni d'un tel dispositif**
Drehkopplungsvorrichtung eines Drehkranzes an ein Rad, sowie mit einer solchen Vorrichtung ausgestattetes Fahrwerk eines Luftfahrzeugs
Device for rotational coupling of a crown gear to a wheel and aircraft landing gear provided with such a device

(30) Priorité: 20.05.2011 FR 1154445
(43) Date de publication de la demande: 21.11.2012
(73) Titulaire: Messier-Bugatti-Dowty, 78140 Vélizy-Villacoublay (FR)
(72) Inventeur: Bucheton, Daniel, 78150 LE CHESNAY (FR); Remond, Sébastien, 78140 VELIZY-VILLACOUBLAY (FR); Eluard, Gilles, 78260 ACHERES (FR)
(74) Mandataire: Parzy, Benjamin Alain

(56) Documents cités:
- FR-A- 339 382
- FR-A- 474 613
- GB-A- 191 229 173
- US-A- 3 610 652

## Description

L'invention concerne un dispositif d'accouplement en rotation d'une couronne à une roue ainsi qu'un atterrisseur d'aéronef muni d'un tel dispositif.

### ARRIERE-PLAN DE L'INVENTION

Afin de permettre des économies de carburant et de réduire le bruit et la pollution engendrés par le fonctionnement des réacteurs au sol, il a été proposé d'assurer le déplacement d'un aéronef sur une aire aéroportuaire sans l'aide des moteurs de propulsion, en motorisant les roues de l'aéronef.

Ainsi, un atterrisseur d'aéronef comportant une jambe articulée à une première extrémité sur l'aéronef et comportant à une deuxième extrémité une roue ou un train de roues reposant sur le sol, est muni en outre d'un organe d'entraînement de la roue ou moteur de taxiage afin de déplacer l'aéronef lorsqu'il est au sol, par exemple entre son point de parking et la piste d'envol.

Or, lors des atterrissages ou des décollages, l'atterrisseur est soumis à de fortes contraintes qui entraînent une déformation de la jante de la roue et un déplacement de son axe de rotation par rapport à l'atterrisseur.

Des moyens d'accouplement sont alors disposés entre l'organe d'entraînement et la roue pour absorber les déformations et les déplacements de la jante de la roue par rapport à l'organe d'entraînement. Par exemple, dans le domaine ferroviaire, on connaît les transmissions à ressorts hélicoïdaux Westinghouse ou Sécheron. Toutefois, pour ces moyens d'accouplement sont lourds et peu adaptés aux aéronefs.

Il est également connu du document FR339382 un manchon de transmission comprenant trois bielles compressibles rotulées en leurs deux extrémités et transmettant le mouvement de rotation d'un premier plateau solidaire d'un premier arbre à un second plateau solidaire d'un second arbre.

Ces bielles permettent de relier les deux arbres par une liaison élastique capable d'absorber un désalignement entre les axes des deux arbres.

### OBJET DE L'INVENTION

L'invention a pour objectif de proposer des moyens d'accouplement permettant d'absorber des déformations importantes de la jante et/ou un déplacement de l'axe de rotation de la roue.

### BREVE DESCRIPTION DE L'INVENTION

En vue de la réalisation de ce but, il est proposé selon l'invention un dispositif d'accouplement en rotation d'une roue à une couronne d'entraînement de la roue montée pour tourner coaxialement à la roue, le dispositif comportant une pluralité d'organes de liaison rotulés d'une part à la jante et d'autre part à la couronne et s'étendant chacun selon une direction définie par le centre des rotules et contenue dans un plan perpendiculaire à l'axe de rotation en faisant un angle avec une direction radiale.

Ainsi, l'axe de rotation de la roue peut admettre un décalage angulaire par rapport à l'axe de rotation de la couronne d'entraînement tout en transmettant le mouvement de rotation.

Avantageusement, chaque organe de liaison a une longueur qui varie sous l'effet d'un effort subi par l'organe de liaison à l'encontre d'un effort interne dissipatif.

La longueur variable de l'organe de liaison permet d'admettre davantage de degrés de liberté entre la couronne et la roue.

Le dispositif selon l'invention est particulièrement adapté à un atterrisseur comportant au moins un essieu pour recevoir au moins une roue associée à un organe d'entraînement de la roue comportant une couronne montée pour tourner coaxialement à la roue et reliée à des moyens commandés de son entraînement en rotation.

### BREVE DESCRIPTION DES DESSINS

L'invention sera mieux comprise à la lumière de la description illustrée par les figures annexées, parmi lesquelles :
- la figure 1 est une vue de face partiellement coupée d'un atterrisseur, portant deux ensembles de roue et frein dont un seul est représenté, la figure étant donnée à titre d'illustration non limitative du contexte de l'invention.
- la figure 2 est une vue agrandie de l'organe d'entraînement en rotation équipant l'ensemble roue et frein de la figure 1 et comprenant un dispositif d'accouplement selon l'invention.
- la figure 3 est une vue en coupe selon la ligne III-III de la figure 2 du dispositif d'accouplement selon l'invention illustré en figure 2 ;
- les figures 4, 5, 6 sont des vues en coupe longitudinale d'une bielle télescopique utilisée dans le cadre de l'invention respectivement au repos, en compression maximale et en extension maximale.

### DESCRIPTION DETAILLEE DE L'INVENTION

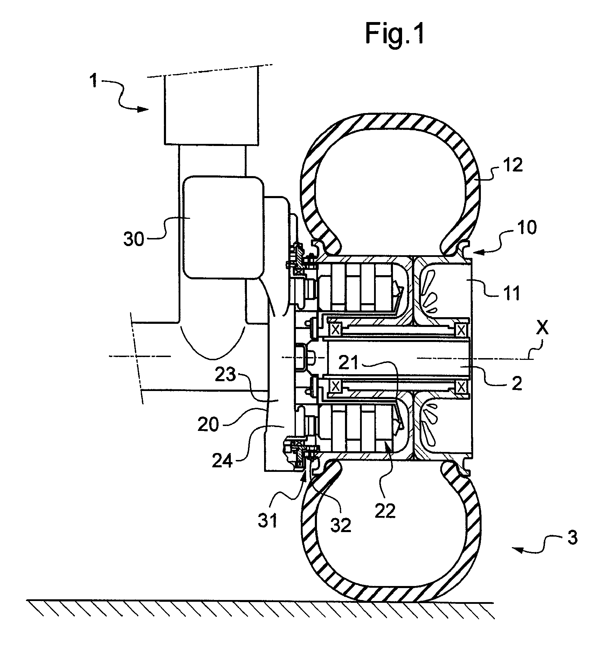

La figure 1 illustre un atterrisseur 1 de type connu donné à titre d'exemple pour illustrer le contexte de l'invention. L'atterrisseur comporte une partie inférieure portant un essieu 2 destiné à recevoir deux ensembles de roue et frein 3 de part et d'autre de l'atterrisseur. Un seul de ces ensembles est ici représenté.

Chaque ensemble comporte :
- une roue 10 comportant une jante 11 (ici comprenant deux demi-jantes) qui reçoit un pneumatique 12, est montée pour tourner sur l'essieu 2 au moyen de roulements, selon un axe de rotation X ;
- un frein 20 comportant un tube de torsion 21 boulonné sur l'atterrisseur pour être immobile en rotation, des disques 22 s'étendant entre le tube de torsion 21 et la jante 11 pour être solidaire en rotation alternativement de la jante 11 et du tube de torsion 21, un porte-actionneurs 23 solidaire du tube de torsion 21 et portant des actionneurs de freinage 24, ici des actionneurs hydrauliques comprenant chacun un piston monté pour coulisser dans des cavités du porte-actionneur 23. Ceci n'est bien sûr pas limitatif, et les actionneurs pourront être du type électrique, intégrés comme ici à la structure du porte-actionneur, ou démontables unitairement.

Le porte-actionneur 23 porte un organe d'entraînement en rotation, en l'occurrence ici un motoréducteur électrique 30 qui entraîne en rotation une couronne d'entraînement 31 montée autour du porte-actionneur 23 pour tourner sur ce dernier autour de l'axe de rotation X de la roue 10.

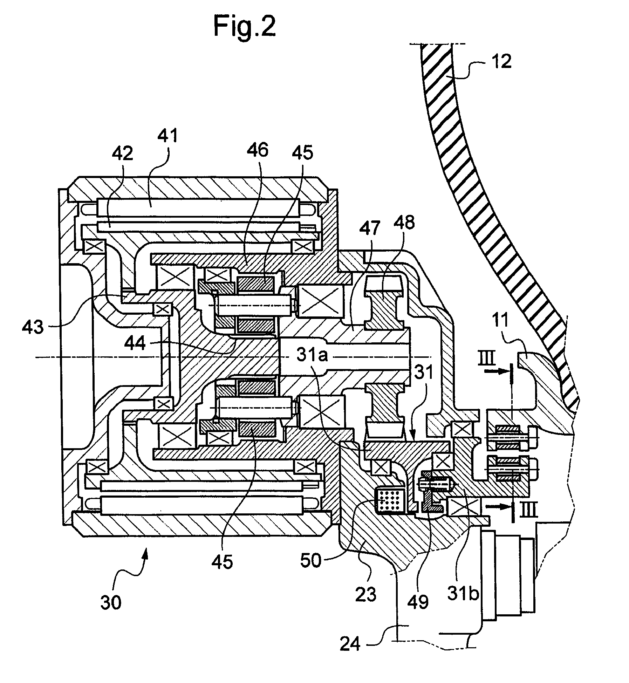

En référence à la figure 2, le motoréducteur 30 comporte tout d'abord un moteur électrique annulaire avec un stator 41 et un rotor 42 monté pour tourner autour d'un axe de rotation X, ici s'étendant parallèlement à un axe de rotation de la roue associée. Le rotor 42 est couplé en rotation à un arbre d'entrée 43 qui forme le pignon central 44 d'un réducteur épicycloïdal dont on reconnaît les pignons satellites 45. Ces derniers coopèrent avec une couronne fixe 46 et sont portés par un porte-satellite 47 ayant un arbre de sortie qui reçoit à son extrémité un pignon de sortie 48.

Le pignon de sortie 48 coopère avec la couronne d'entraînement 31 pour faire tourner celle-ci et ainsi entraîner la roue en rotation par l'intermédiaire d'un dispositif d'accouplement 32 en rotation selon l'invention.

On remarquera ici que la couronne d'entraînement 31 est en fait composée de deux demi-couronnes 31a et 31b, toutes deux montées à rotation selon le même axe de rotation. La demi-couronne 31a est directement entraînée en rotation par le pignon de sortie 48. Les deux demi-couronnes sont montées à rotation sur le porte-actionneur 23 indépendamment l'une de l'autre, mais peuvent être sélectivement accouplées au moyen d'un organe d'accouplement 49 à dents radiales. L'organe d'accouplement 49 prend ici la forme d'un crabot monté mobile sur la demi-couronne 31b selon une direction axiale pour engager des dents radiales homologues de la demi-couronne 31a, sous l'action d'un électroaimant 50 annulaire s'étendant dans le porte-actionneurs 23.

Selon l'invention, la demi-couronne 31b est attelée à la roue 10 par le dispositif d'accouplement 32 comportant une pluralité d'organes de liaison, ici des bielles 60 rotulées par une première extrémité 61 sur la demi-couronne 31b et par une deuxième extrémité 62 sur la jante 11.

Plus précisément, la demi-couronne 31b comporte pour chaque bielle 60 une première chape 63 dans laquelle est reçue la première extrémité 61 d'une bielle 60, pour former une liaison rotule.

La jante 11 comporte également une deuxième chape 64 dans laquelle est reçue la deuxième extrémité 62 de la bielle 60 pour former une liaison rotule.

Chaque organe de liaison s'étend selon une direction Y (définie par le centre des rotules) qui est contenue dans un plan perpendiculaire à l'axe de rotation X de la roue.

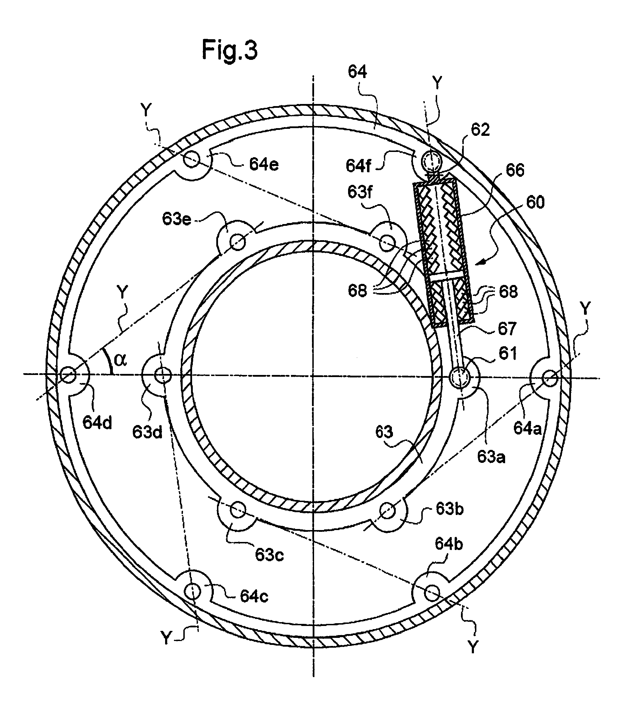

Comme cela est plus visible à la figure 3, la demi-couronne 31b comprend deux flancs 63 annulaires comportant chacun six oreilles 63a à 63f pour recevoir entre elles une première extrémité 61 d'une bielle 60. Seul l'un des flancs 63 est visible en figure 3. Pour simplifier l'illustration sur cette figure, une seule des bielles 60 est représentée, les autres étant simplement symbolisées par des traits d'axe Y.

La jante 11 comprend deux flancs 64 annulaires comportant chacun six oreilles 64a à 64f pour recevoir la deuxième extrémité 62 des bielles 60. En pratique, les rotules d'extrémité sont reliées aux oreilles formant chape au moyen de broches s'étendant au travers des oreilles et de la rotule correspondante.

Les bielles 60 s'étendent selon les directions Y qui forment un angle α avec une direction radiale en étant disposées par exemple entre une oreille 63a de la demi-couronne 31b et une oreille 64f décalée angulairement par rapport la direction radiale de l'oreille 63a.

Ainsi, lorsque la demi-couronne 31b tourne dans un premier sens, elle exerce une traction sur les bielles qui entraînent alors la jante 11 en rotation.

Lorsque la demi-couronne 31b tourne en sens opposé, les bielles 60 sont comprimées et entraînent la jante 11 en rotation.

L'agencement des bielles 60, rotulées sur la couronne d'entraînement 31 et sur la jante 11, permet à la jante 11 de bénéficier de deux degrés de liberté en rotation par rapport à la couronne 31. Ainsi, il est possible d'admettre un décalage angulaire entre l'axe de rotation de la couronne 31 et l'axe de rotation de la jante 11 tout en permettant la transmission du mouvement de rotation.

Selon un aspect particulier de l'invention, les bielles 60 sont télescopiques. Comme cela est représenté de façon schématique sur la figure 3, elles comprennent un corps 66, lié à la jante 11, et une tige 67 formant piston, liée à la demi-couronne 31b, et coulissant dans le corps 66. Selon un mode de réalisation particulier, les organes de liaison 60 comportent en outre des rondelles ressort 68, ici des rondelles Belleville, disposées entre le corps 66 et le piston 67 pour s'opposer aux mouvements entre le corps 66 et le piston 67, c'est-à-dire aussi bien en traction qu'en compression.

Les rondelles Belleville 68 sont empilées de sorte à former un ressort permettant à la bielle 60 de modifier sa longueur tout en transmettant un effort.

Les bielles télescopiques 60 permettent à la jante 11 d'augmenter encore les libertés possibles par rapport à la couronne 31 tout en permettant la transmission du mouvement de rotation. Ainsi, quel que soit la déformation de la jante 11 ou le déplacement axial ou angulaire de son axe de rotation, le dispositif d'accouplement 32 selon l'invention permet de transmettre le mouvement de rotation de la couronne d'entraînement 31 à la jante 11.

Les rondelles Belleville 68 permettent également de réaliser un ressort dont la raideur et la flèche peuvent être facilement modifiées sans pour autant modifier l'encombrement de l'organe de liaison 60. Pour cela, les rondelles 68 sont montées en alternance, afin d'additionner les flèches ; dans le même sens, afin d'augmenter la raideur ; ou de façon mixte, en disposant sélectivement les rondelles 68 en alternance et dans le même sens afin d'obtenir la raideur et la flèche désirée.

En outre, les rondelles Belleville 68 peuvent être utilisées pour dissiper de l'énergie, notamment lorsqu'elles sont empilées dans le même sens. En effet, lorsque deux rondelles 68 sont empilées dans le même sens, les frottements engendrés par leurs déplacements respectifs dissipent une partie de l'énergie utilisée pour leur déplacement.

L'effort dissipatif généré par les rondelles Belleville 68 est particulièrement avantageux, car il permet d'atténuer les saccades du dispositif d'accouplement 32 lors du démarrage. En effet, lors du démarrage de l'organe d'entraînement, la roue n'est pas entraînée en rotation immédiatement en raison de son inertie et plus globalement en raison de l'inertie de l'aéronef. La couronne d'entraînement 31 va ainsi entrer en oscillation autour de l'axe de rotation et provoquer des saccades dans la rotation de la roue. Pour atténuer les oscillations, il est alors particulièrement intéressant d'avoir un amortisseur, c'est-à-dire un organe capable dissiper l'énergie des oscillations.

Ainsi, l'utilisation de rondelles Belleville dans les organes de liaison permet de générer un effort élastique et un effort dissipatif lors du déplacement relatif du piston 67 et du corps 66.

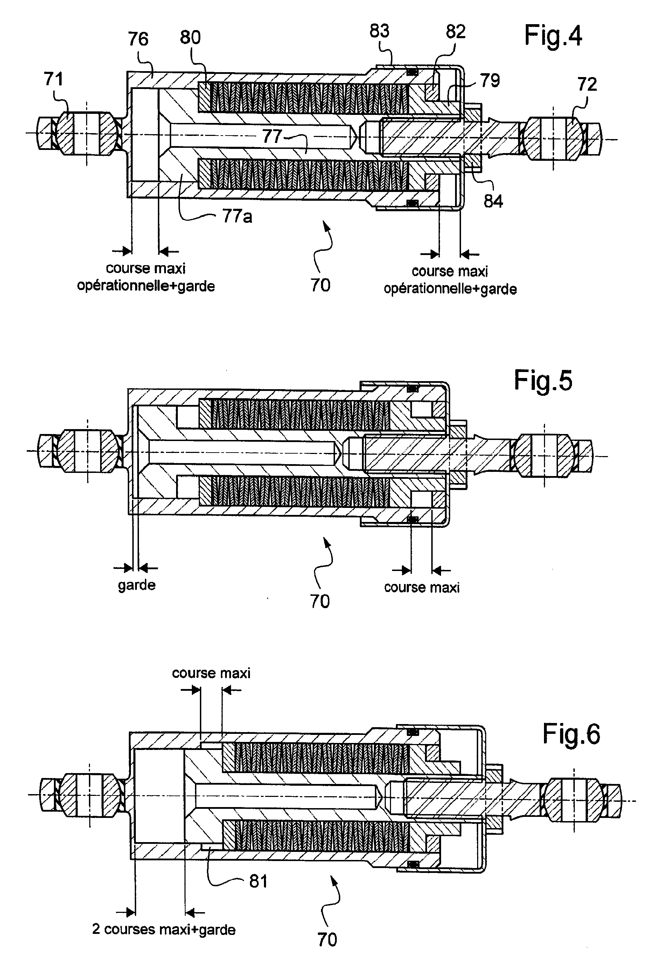

Un exemple de réalisation d'une telle bielle télescopique est illustré aux figures 4 à 6.

La bielle 70 comporte un corps 76 et dans lequel une tige 77 formant piston 77a est reçue à coulissement. La tige 77 saille du corps et est terminée par une chape rotulée 71. Des rondelles Belleville 78 sont installées autour de la tige pour s'étendre entre d'une part sur un fond coulissant 79 du corps 76 venant en appui contre un arrêt 82, et d'autre part une rondelle d'arrêt 80 venant en appui contre un redan 81 du corps lorsque la bielle est au repos comme illustré à la figure 4.

Une coiffe 83 recouvre l'extrémité du corps 71 du côté du fond coulissant 79 pour protéger la partie de la tige 77 qui coulisse dans le fond 79 et sui saille de celui-ci lors d'une extension.

En outre, la tige 77 comporte un écrou d'arrêt 84 venant en appui contre l'arrêt 82. Les rondelles Belleville 78 sont ainsi maintenues en permanence à l'état compressé et définissent une longueur de repos de la bielle lorsque celle-ci n'est pas sollicitée.

En cas de compression (fig 5), l'écrou d'arrêt 84 appuie sur le fond coulissant 79 pour le faire rentrer dans le corps 70. En cas d'extension (fig 6), le piston 77a appuie sur la rondelle d'arrêt 80 pour la décoller du redan 81.

Bien entendu, l'invention n'est pas limitée au mode de réalisation décrit précédemment, mais englobe toutes les variantes définies dans le cadre des revendications.

Les bielles peuvent également contenir d'autres types de ressorts et d'amortisseurs que les rondelles Belleville, par exemple des amortisseurs à gaz ou huile, couplés avec des ressorts de torsion.

## Revendications

1. Dispositif d'accouplement (32) en rotation d'une roue (10) à une couronne d'entraînement (31) de la roue (10) montée pour tourner coaxialement à la roue (10), le dispositif (32) comportant une pluralité d'organes de liaison (60) s'étendant chacun selon une direction contenue dans un plan perpendiculaire à l'axe de rotation et faisant un angle avec une direction radiale, les organes de liaison (60) étant rotulés d'une part à la roue (10) et d'autre part à la couronne (31),
**caractérisé en ce que** chaque organe de liaison (60) est élastiquement déformable en compression et en traction selon un axe passant par ses deux extrémités rotulées.

2. Dispositif selon la revendication 1 dans lequel chaque organe de liaison (60) a une longueur qui varie sous l'effet d'un effort subi par l'organe de liaison (60) à l'encontre d'un effort interne dissipatif.

3. Dispositif selon la revendication 2 dans lequel chaque organe de liaison (60, 70) est une bielle télescopique qui comporte deux éléments (66, 67 ; 76, 77) coulissants reliés respectivement à la roue (10) et à la couronne (31), des rondelles Belleville (68, 78) étant interposées entre les éléments pour générer un effort élastique et dissipatif lors d'un déplacement relatif des éléments.

4. Atterrisseur comportant au moins un essieu (2) pour recevoir au moins une roue (10) associée à un organe d'entraînement (30) de la roue (10) comportant une couronne (31) montée pour tourner coaxialement à la roue (10) et reliée à des moyens commandés de son entraînement en rotation, **caractérisé en ce que** la roue (10) et la couronne (31) sont accouplées par un dispositif d'accouplement (32) selon l'une des revendications précédentes.

## Patentansprüche

1. Vorrichtung (32) zur Drehkopplung eines Rades (10) an einen Antriebskranz (31) des Rades (10), der so gelagert ist, dass er sich koaxial mit dem Rad (10) dreht, die Vorrichtung (32) eine Vielzahl von Verbindungsorganen (60) umfasst, die sich jeweils in eine Richtung erstrecken, die in einer zur Drehachse senkrechten Ebene enthalten ist und einen Winkel mit einer radialen Richtung bildet, wobei die Verbindungsorgane (60) einerseits am Rad (10) und andererseits am Kranz (31) auf einem Kugelgelenk gelagert sind, **dadurch gekennzeichnet, dass** jedes Verbindungsorgan (60) durch Druck und Zug entlang einer Achse, die durch seine beiden auf Kugelgelenken gelagerten Enden verläuft, elastisch verformbar ist.

2. Vorrichtung nach Anspruch 1, wobei jedes Verbindungsorgan (60) eine Länge hat, die unter der Wirkung einer Kraft, der das Verbindungsorgan (60) entgegen einer inneren dissipativen Kraft ausgesetzt ist, variiert.

3. Vorrichtung nach Anspruch 2, wobei jedes Verbindungsorgan (60, 70) eine Teleskopstange ist, die zwei gleitende Elemente (66, 67; 76, 77) umfasst, die mit dem Rad (10) bzw. mit dem Kranz (31) verbunden sind, wobei Tellerfedern (68, 78) zwischen den Elementen angeordnet sind, um eine elastische und dissipative Kraft während einer Relativverschiebung der Elemente zu erzeugen.

4. Fahrwerk, umfassend mindestens eine Achse (2) zur Aufnahme mindestens eines Rades (10), das mit einem Antriebsorgan (30) zum Antrieb des Rades (10) verbunden ist, wobei das Antriebsorgan einen Kranz (31) umfasst, der so gelagert ist, dass er sich koaxial mit dem Rad (10) dreht und mit gesteuerten Mittel für seinen Drehantrieb verbunden ist, **dadurch gekennzeichnet, dass** das Rad (10) und der Kranz (31) durch eine Kopplungsvorrichtung (32) nach einem der vorhergehenden Ansprüche gekoppelt sind.

## Claims

1. Device (32) for rotationally coupling a wheel (10) with a ring (31) for driving the wheel (10) mounted so as to rotate coaxially with the wheel (10), the device (32) having a plurality of connecting members (60) each extending in a direction contained in a plane perpendicular to the axis of rotation and forming an angle with a radial direction, the connecting members (60) being pivotably mounted, on the one hand, on the wheel (10) and, on the other hand, on the ring (31),
**characterized in that** each connecting member (60) is elastically deformable in compression and in traction along an axis that passes through its two pivot-mounted ends.

2. Device according to Claim 1, wherein each connecting member (60) has a length which varies when subject to a force acting on the connecting member (60) in opposition to a internal dissipative force.

3. Device according to Claim 2, wherein each connecting member (60, 70) is a telescopic linkage which comprises two sliding parts (66, 67; 76, 77) connected respectively to the wheel (10) and to the ring (31), Belleville washers (68, 78) being arranged between the parts so as to generate a resilient and dissipative force during relative displacement of the parts.

4. Landing gear comprising at least one axle (2) for receiving at least one wheel (10) associated with a member (30) for driving the wheel (10) comprising a ring (31) mounted so as to rotate coaxially with the wheel (10) and connected to controlled means for rotational driving thereof, **characterized in that** the wheel (10) and the ring (31) are coupled together by a coupling device (32) according to one of the preceding claims.
